# EUROPEAN PATENT APPLICATION

(11) **EP 4 769 173 A1**
(43) Date of publication of application: **01.07.2026**
(21) Application number: 23953339.1
(22) Date of filing: 25.09.2023
(51) Int. Cl.: G06F 16/2457

(54) **METHOD AND APPARATUS FOR RECOMMENDING APPLICATION SUITE, AND ELECTRONIC DEVICE AND STORAGE MEDIUM**

(71) Applicant: Siemens Aktiengesellschaft, 80333 München (DE)
(72) Inventor: YU, Yanbin, Shanghai 200082 (CN)
(74) Representative: Isarpatent
(86) International application number: PCT/CN2023/121220
(87) International publication number: WO 2025/065174

(57) **Abstract**

Implementations of the present invention disclose an application suite recommendation method and apparatus, an electronic device, and a storage medium. The method includes: receiving requirement information of a digital system; inputting the requirement information to a recommendation unit adapted to recommend an application suite, where the recommendation unit is determined based on historical requirement information and label information of each application in a historical application suite, and the historical application suite is associated with the historical requirement information; and providing the application suite recommended by the recommendation unit. Automatic recommendation of the application suite is implemented via the recommendation unit determined based on the historical requirement information and the historical application suite, which reduces dependency on a human expert, reduces costs, and improves recommendation efficiency.

## Description

### TECHNICAL FIELD

The present invention relates to the field of digital technologies, and in particular, to an application suite recommendation method and apparatus, an electronic device, and a storage medium.

### BACKGROUND

In a microservice-based modular digital system, a user is allowed to freely select various applications (APPs) and customize workflows between the applications to customize a digital system. Functions of a plurality of applications and other components are integrated in an application suite (APP Suite). There are a large quantity of applications available on an application platform, and dependency, interface compatibility, and function complementation between the applications are very complex, making it time-consuming to select appropriate applications to build an application suite.

User requirements may be collected through face-to-face interviews, on-site investigations, and the like. These user requirements, together with the understanding of the service process by production experts and evaluation of interface and system integration feasibility by system architects, can aid the user in selecting an appropriate application suite. However, this method has many limitations. For example, the quantity of applications that can be processed by human experience is limited, and the entire ecological system cannot be fully used.

### SUMMARY

Implementations of the present invention provide an application suite recommendation method and apparatus, an electronic device, and a storage medium.

An application suite recommendation method, including:
receiving requirement information of a digital system;
inputting the requirement information to a recommendation unit adapted to recommend an application suite, where the recommendation unit is determined based on historical requirement information and label information of each application in a historical application suite, and the historical application suite is associated with the historical requirement information; and
providing the application suite recommended by the recommendation unit.

Therefore, automatic recommendation of the application suite is implemented via the recommendation unit determined based on the historical requirement information and the historical application suite, which reduces dependency on a human expert, reduces costs, and improves recommendation efficiency.

In an implementation, the method includes:
establishing a mapping table based on a mapping relationship between a keyword in the historical requirement information and the label information of each application in the historical application suite; and
storing the mapping table in the recommendation unit, where the recommendation unit is adapted to determine, by querying the mapping table, the label information that matches a keyword in the requirement information, and determine the recommended application suite based on the matching label information.

Therefore, the application suite can be quickly determined by querying the mapping table, so that a recommendation speed is improved.

In an implementation, the method includes:
determining a training sample, where the training sample includes the historical requirement information, and a training label of the training sample is the label information of each application in the historical application suite;
inputting the training sample to a neural network model, to receive label information of a predicted application from the neural network model;
determining a loss function value based on a difference between the label information of the predicted application and the training label; and
configuring a model parameter of the neural network model, to cause the loss function value to be less than a preset threshold.

It can be learned that the application suite may be determined in an artificial intelligence manner, so that recommendation accuracy is improved.

In an implementation, the requirement information includes at least one of the following:
a system functional requirement that meets a standard vocabulary about functional division of the digital system;
a digital state of the digital system;
hardware configuration information of the digital system; and
an engineering scope of the digital system.

Therefore, the requirement information has diversity and standardization, so that standardized recommendation can be implemented, and recommendation efficiency can be improved.

In an implementation, the label information includes at least one of the following:
a unique identifier of the application; and
capability description information of the application.

Therefore, the label information not only can represent the unique identifier of the application, but also can represent a capability of the application.

In an implementation, before the providing the application suite recommended by the recommendation unit, the method further includes:
parsing an application dependency relationship of the recommended application suite;
obtaining, based on the application dependency relationship, an application on which the recommended application suite depends; and
including the depended-on application in the recommended application suite.

It can be learned that, by analyzing the application dependency relationship, the depended-on application can be automatically included in the application suite, and a user does not need to search for the depended-on application. This facilitates use of the user.

An application suite recommendation apparatus, including:
a receiving module, configured to receive requirement information of a digital system;
an input module, configured to input the requirement information to a recommendation unit adapted to recommend an application suite, where the recommendation unit is determined based on historical requirement information and label information of each application in a historical application suite, and the historical application suite is associated with the historical requirement information; and
a providing module, configured to provide the application suite recommended by the recommendation unit.

Therefore, automatic recommendation of the application suite is implemented via the recommendation unit determined based on the historical requirement information and the historical application suite, which reduces dependency on a human expert, reduces costs, and improves recommendation efficiency.

In an implementation, the apparatus includes:
a mapping module, configured to: establish a mapping table based on a mapping relationship between a keyword in the historical requirement information and the label information of each application in the historical application suite; and store the mapping table in the recommendation unit, where the recommendation unit is adapted to determine, by querying the mapping table, the label information that matches a keyword in the requirement information, and determine the recommended application suite based on the matching label information.

Therefore, the application suite can be quickly determined by querying the mapping table, so that a recommendation speed is improved.

In an implementation, the apparatus includes:
a training module, configured to: determine a training sample, where the training sample includes the historical requirement information, and a training label of the training sample is the label information of each application in the historical application suite; input the training sample to a neural network model, to receive label information of a predicted application from the neural network model; determine a loss function value based on a difference between the label information of the predicted application and the training label; and configure a model parameter of the neural network model, to cause the loss function value to be less than a preset threshold.

It can be learned that the application suite may be determined in an artificial intelligence manner, so that recommendation accuracy is improved.

In an implementation, the providing module is configured to, before providing the application suite recommended by the recommendation unit, parse an application dependency relationship of the recommended application suite; obtain, based on the application dependency relationship, an application on which the recommended application suite depends; and include the depended-on application in the recommended application suite.

Therefore, the requirement information has diversity and standardization, so that standardized recommendation can be implemented, and recommendation efficiency can be improved.

An electronic device, including:
a processor; and
a memory, configured to store executable instructions of the processor, where
the processor is configured to: read the executable instructions from the memory, and execute the executable instructions to implement the application suite recommendation method according to any one of the foregoing aspects.

A computer-readable storage medium, storing computer instructions, where when the computer instructions are executed by a processor, the application suite recommendation method according to any one of the foregoing aspects is implemented.

A computer program product, including a computer program, where when the computer program is executed by a processor, the application suite recommendation method according to any one of the foregoing aspects is implemented.

### BRIEF DESCRIPTION OF THE DRAWINGS

To cause a person of ordinary skill in the art to understand the foregoing and other features and advantages of the present invention more clearly, preferred embodiments of the present invention are described in detail below with reference to accompany drawings. In the accompany drawings:
FIG. 1 is a schematic flowchart of an application suite recommendation method according to an implementation of the present invention;
FIG. 2 is an example diagram of expert-based manual recommendation of an application suite;
FIG. 3 is a first example diagram of automatic recommendation of an application suite based on expert knowledge according to an implementation of the present invention;
FIG. 4 is a second example diagram of automatic recommendation of an application suite based on expert knowledge according to an implementation of the present invention;
FIG. 5 is an example diagram of standardized functional division of a digital system;
FIG. 6 is an example diagram of a structure of an application suite recommendation apparatus according to an implementation of the present invention; and
FIG. 7 is an example diagram of a structure of an electronic device according to an implementation of the present invention.

Reference numerals are as follows:

| Number | Description |
|---|---|
| 101 to 103 | Steps |
| 10 | Manufacturing enterprise user |
| 11 | Requirement input process |
| 12 | Recommendation processing |
| 13 | Application management processing |
| 14 | Application database |
| 16 | Application provider |
| 17 | Expert |
| 15 | Database |
| 30 | Recommendation unit |
| 31 | Neural network model |
| 60 | Enterprise control level |
| 71 | Manufacturing control level |
| 72 | Manufacturing level |
| 61 | Detailed modeling and process control |
| 62 | Information management |
| 63 | Quality management |
| 64 | Personnel management |
| 65 | Device management |
| 66 | Performance analysis |
| 67 | Data obtaining |
| 68 | Material management |
| 69 | Order management |
| 70 | Energy management |
| 600 | Application suite recommendation apparatus |
| 601 | Receiving module |
| 602 | Input module |
| 603 | Providing module |
| 604 | Mapping module |
| 605 | Training module |
| 700 | Electronic device |
| 701 | Processor |
| 702 | Memory |

### DETAILED DESCRIPTION

To make the objective, technical solutions, and advantages of the present invention clearer, the present invention is further described in detail below by using embodiments.

For brief and intuitive description, the following describes the solutions of the present invention by describing several representative implementations. A large quantity of details in the implementations are used only to help understand the solutions of the present invention. However, clearly, implementation of the technical solutions of the present invention may not be limited to these details. To avoid unnecessarily obscuring the solutions of the present invention, some implementations are not described in detail, but only frameworks of the implementations are provided. In the following descriptions, "include" means "include but are not limited to", and "according to ..." means "at least according to ..., but is not limited to according to only ...". Because of a Chinese language habit, when a quantity of components is not particularly specified below, it means that the quantity of the components may be one or more, or it may be understood as that there is at least one such component.

In this implementation of the present invention, a recommendation unit is pre-established based on expert knowledge. Then, an application suite may be automatically recommended via the recommendation unit without depending on an expert.

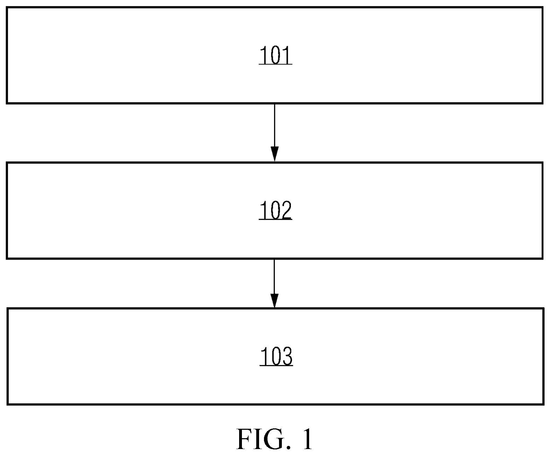

FIG. 1 is a schematic flowchart of an application suite recommendation method according to an implementation of the present invention. As shown in FIG. 1, the method includes:
Step 101: Receive requirement information of a digital system.

The digital system is a system that converts a conventional manual operation into a digital automatic operation to improve working efficiency and precision, and that can record and process data in real time. The digital system digitizes the data by using technologies such as a computer and related software, and implements an automatic service process through data storage, transmission, analysis, and processing, to improve the working efficiency and reduce costs.

The digital system includes various systems and software that are based on digital technologies, for example,
(1) digital office systems, for example, an email system, a collaborative office software system, and an online document management system, which can help an enterprise implement informatization office and improve working efficiency and communication efficiency;
(2) digital marketing systems, for example, an electronic commerce platform, a digital advertisement delivery platform, and a social media marketing tool, which can help the enterprise implement online sales and promotion and improve market coverage and sales revenue;
(3) digital production systems, for example, a digital production line, an intelligent logistics management system, and a quality control system, which can help the enterprise implement production automation and management optimization and improve production efficiency and a quality level; and
(4) digital customer service systems, for example, an online customer service system, an intelligent customer service robot, and a customer relationship management system, which can help the enterprise implement digitization and intelligentization of a customer service and improve customer satisfaction and loyalty.

Typical instances of the digital system are listed above, and a person skilled in the art may realize that the descriptions are merely examples, and are not intended to limit the protection scope of implementations of the present invention.

Herein, the requirement information of the digital system may be received over a user interface. Meanings of the requirement information of the digital system include:
(1) Requirement information of an already built digital system. For example, the already built digital system further needs a new function or a personalized customization function, and corresponding requirement information may be generated for the function.
(2) Requirement information in a process of building the digital system, for example, requirement information of a specific function module included in the digital system.

In an implementation, the requirement information includes at least one of the following:
(1) System functional requirement that meets a standard vocabulary about functional division of the digital system

For example, a user-defined function list according to industry standards such as ISA95, ISA88, and VDI5600 may be presented on the user interface, and a user may select a function that needs to be implemented from the list as the system functional requirement.

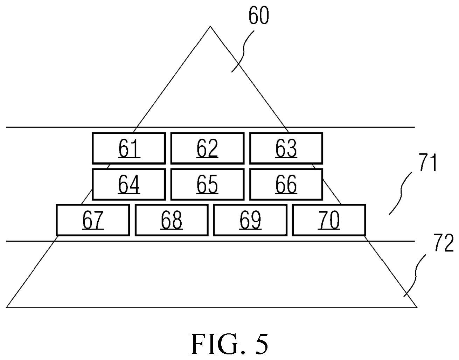

FIG. 5 is an example diagram of standardized functional division of a digital system. In FIG. 5, a standardized functional architecture of the digital system includes, from top to bottom, an enterprise control level 60 (for example, enterprise resource planning (ERP)), a manufacturing control level 71 (for example, a manufacturing execution system (MES)), and a manufacturing level 72 (for example, a work center, a machine, and an installation configuration). The manufacturing control level 71 includes detailed modeling and process control 61, information management 62, quality management 63, personnel management 64, device management 65, performance analysis 66, data obtaining 67, material management 68, order management 69, and energy management 70.

### (2) Digital state of the digital system

Based on a standard mode of a manufacturing enterprise, the user may describe a current status of the data by selecting and configuring a data source. For example, the digital state lists a specific format and/or data source needed by the data. For example, the following is specified in the requirement information: (1) a type of the data source being MongoDB; (2) an IP address of the data source; (3) a data type (for example, an order table); and (4) a data field (for example, an ID), and the like.

### (3) Hardware configuration information of the digital system

For example, the hardware configuration information is requirement information that is needed by the digital system and that is about hardware configuration. Specifically, the hardware configuration information may include hardware device information (for example, a device type and a device quantity), an interface (for example, Ethernet or Profibus), a protocol (for example, Step7, Modbus, and OPCUA), a data point, and the like. Specifically, the hardware device information may include an S7-300 controller, a WinCC controller, a LOGO-smart controller, and the like.

### (4) Engineering scope of the digital system

For example, the engineering scope may include a workgroup scope or a production line scope of the digital system.

Step 102: Input the requirement information to a recommendation unit adapted to recommend an application suite, where the recommendation unit is determined based on historical requirement information and label information of each application in a historical application suite, and the historical application suite is associated with the historical requirement information.

The historical requirement information may be requirement information historically provided to a human expert. The historical application suite is a recommended application suite determined by the human expert based on the historical requirement information. In other words, the human expert determines the historical application suite based on the historical requirement information and professional knowledge of the human expert. Therefore, there is an association between the historical application suite and the historical requirement information, and the association represents expert knowledge. The expert knowledge represented by the association may be used to generate the recommendation unit adapted to recommend the application suite. Specifically, the recommendation unit may be implemented as a software algorithm, a hardware module, a firmware module, or an overall integrated system including the software algorithm and/or the hardware module and/or the firmware module.

In an implementation, the label information of the application includes at least one of the following: a unique identifier of the application; and capability description information of the application. Similarly, in the capability description information, a capability of the application is described by using the standard vocabulary that meets the functional division of the digital system.

Herein, after receiving input information, the recommendation unit determines the recommended application suite (for example, determines a unique identifier of each application included in the application suite). It can be learned that, automatic recommendation of the application suite is implemented via the recommendation unit determined based on the historical requirement information and the historical application suite, which reduces dependency on the human expert, reduces costs, and improves recommendation efficiency.

Step 103: Provide the application suite recommended by the recommendation unit.

Herein, the application suite recommended by the recommendation unit may be obtained (for example, from a cloud APP platform) in various manners, and the application suite recommended by the recommendation unit is provided (for example, the application suite is sent to an initiator of the requirement information of the digital system).

In an implementation, the method includes: establishing a mapping table based on a mapping relationship between a keyword in the historical requirement information and the label information of each application in the historical application suite; and storing the mapping table in the recommendation unit, where the recommendation unit is adapted to determine, by querying the mapping table, the label information that matches a keyword in the requirement information, and determine the recommended application suite based on the matching label information. Therefore, the application suite can be quickly determined by querying the mapping table, so that a recommendation speed is improved.

For example, it is assumed that keywords in the historical requirement information include: "material loading", "product quality control", and "assembly". The historical application suite includes an APP1, an APP2, an APP3, and an APP4. Label information of the APP1 includes description information of "material loading" and an ID of the APP1, label information of the APP2 includes description information of "raw material quality control" and an ID of the APP2, label information of the APP3 includes description information of "manufacturing process quality control" and an ID of the APP3, and label information of the APP4 includes description information of "assembly" and an ID of the APP4. Therefore, in the mapping table, there is a mapping relationship between "material loading" and the ID of the APP1, there is a mapping relationship between "product quality control" and the IDs of the APP2 and the APP3, and there is a mapping relationship between "assembly" and the ID of the APP4. Preferably, considering that the keywords in the historical requirement information is not necessarily fully consistent with keywords in description information of APPs, a mapping relationship between the keywords in the historical requirement information and the keywords in the description information of the APPs may be further stored in the mapping table, and the keywords in the description information of the APPs are further displayed after IDs of the APP are determined. This facilitates confirmation of recommendation accuracy.

After the mapping table is established, when requirement information including "material loading" is received, by querying the mapping table, it can be learned that matching information is the ID of the APP1, so that the APP1 is recommended. When requirement information including "product quality control" is received, by querying the mapping table, it can be learned that matching information is the ID of the APP2 and the ID of the APP3, so that the APP2 and the APP3 are recommended.

In an implementation, the method includes: determining a training sample, where the training sample includes the historical requirement information, and a training label of the training sample is the label information of each application in the historical application suite; inputting the training sample to a neural network model, to receive label information of a predicted application from the neural network model; determining a loss function value based on a difference between the label information of the predicted application and the training label; and configuring a model parameter of the neural network model, to cause the loss function value to be less than a preset threshold. It can be learned that the application suite may be determined in an artificial intelligence manner, so that recommendation accuracy is improved.

In an implementation, before the providing the application suite recommended by the recommendation unit, the method further includes: parsing an application dependency relationship of the recommended application suite; obtaining, based on the application dependency relationship, an application on which the recommended application suite depends; and including the depended-on application in the recommended application suite.

For example, it is assumed that the application suite recommended by the recommendation unit includes an APP1, an APP1, an APP3, and an APP4. Dependency relationships of the APP1, the APP1, the APP3, and the APP4 are parsed, and it is found that the APP1, the APP1, and the APP3 each may be independently executed without depending on another APP, but execution of the APP4 depends on an APP5. Therefore, the APP5 is obtained (for example, the APP5 is downloaded from a cloud platform), an APP6 is included in the recommended application suite, and then the application suite is provided to the initiator of the requirement information of the digital system. It can be learned that, by analyzing the application dependency relationship, the depended-on application can be automatically included in the application suite, and the user does not need to search for the depended-on application. This facilitates use of the user.

An implementation process of this implementation of the present invention includes two stages. In a first stage, the recommendation unit is generated based on the knowledge of the human expert. In a second stage, the application suite is automatically recommended based on the recommendation unit.

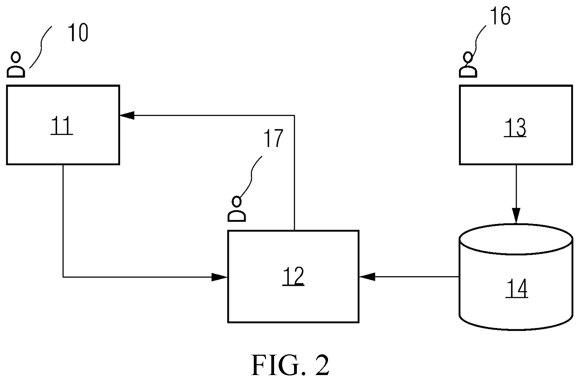

FIG. 2 is an example diagram of expert-based manual recommendation of an application suite. FIG. 2 describes an example of an execution process of the first stage.

In FIG. 2, a plurality of application providers 16 release (one or more) applications of the application providers 16 to an application database 14 in an application management processing 13. In addition, in an application release process, the application providers 16 separately upload capability information of respective applications. In the application database 14, the capability information of each application and an ID of the corresponding application are associatively stored to form label information of each application. A manufacturing enterprise user 10 inputs the requirement information (which may include the system functional requirement, the digital state, the hardware configuration information, the engineering scope, and the like) of the digital system in a requirement input process 11. An expert 17 determines, based on the requirement information, the corresponding application suite (including one or more applications) in a recommendation processing 12 by using knowledge of the expert 17. In the recommendation processing 12, the application suite may be further automatically downloaded from the application database 14, and then provided to the manufacturing enterprise user 10.

Based on learning of the expert knowledge in the first stage, the recommendation unit that can automatically recommend the application suite may be generated.

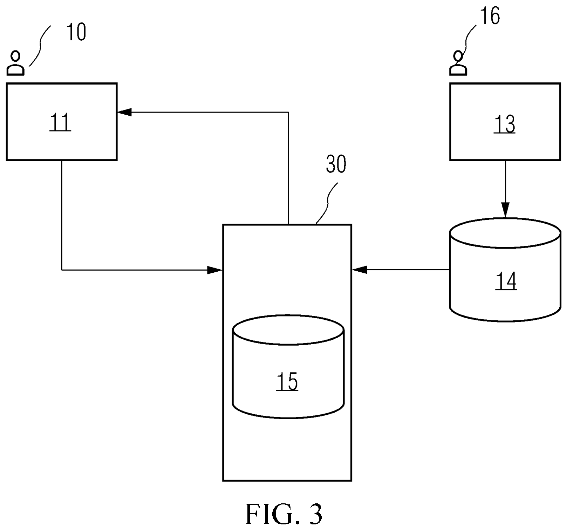

FIG. 3 is a first example diagram of automatic recommendation of an application suite based on expert knowledge according to an implementation of the present invention.

In FIG. 3, a plurality of application providers 16 release applications of the application providers 16 to an application database 14 in an application management processing 13. In an application release process, the application providers 16 separately upload capability information of respective applications. In the application database 14, the capability information of each application and an ID of the corresponding application are associatively stored to form label information of each application. A recommendation unit 30 includes a database 15. The database 15 stores a mapping relationship between a keyword in the requirement information sent to the expert 17 in the first stage and the label information of each application in the application suite determined by the expert 17 in the first stage.

A manufacturing enterprise user 10 inputs the requirement information (which may include the system functional requirement, the digital state, the hardware configuration information, and the engineering scope) of the digital system in a requirement input process 11. The recommendation unit 30 extracts a keyword from the requirement information, and queries, in a recommendation processing 12, the database 15 based on the keyword to determine the corresponding application suite (including one or more applications). The recommendation unit 30 may further automatically download the application suite from the application database 14, and then provide the application suite to the manufacturing enterprise user 10.

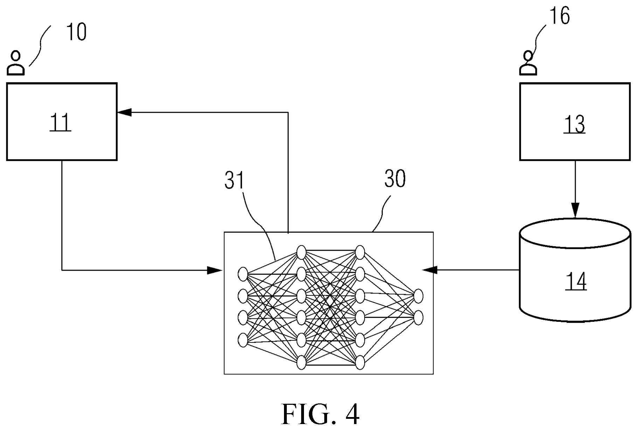

FIG. 4 is a second example diagram of automatic recommendation of an application suite based on expert knowledge according to an implementation of the present invention.

In FIG. 4, a plurality of application providers 16 release applications of the application providers 16 to an application database 14 in an application management processing 13. In an application release process, the application providers 16 separately upload capability information of respective applications. In the application database 14, the capability information of each application and an ID of the corresponding application are associatively stored to form label information of each application. A recommendation unit 30 includes a neural network model 31. The requirement information sent to the expert 17 in the first stage is used as a training sample, and the label information of each application in the application suite determined by the expert 17 in the first stage is used as a training label of the training sample, to train the neural network model 31.

After training of the neural network model 31 is completed, a manufacturing enterprise user 10 inputs the requirement information (which may include the system functional requirement, the digital state, the hardware configuration information, the engineering scope, and the like) of the digital system in a requirement input process 11. The recommendation unit 30 generates label information of a predicted application based on the neural network model 31, and a set of predicted applications constitutes the downloaded application suite. The recommendation unit 30 may further automatically download the application suite from the application database 14, and then provide the application suite to the manufacturing enterprise user 10.

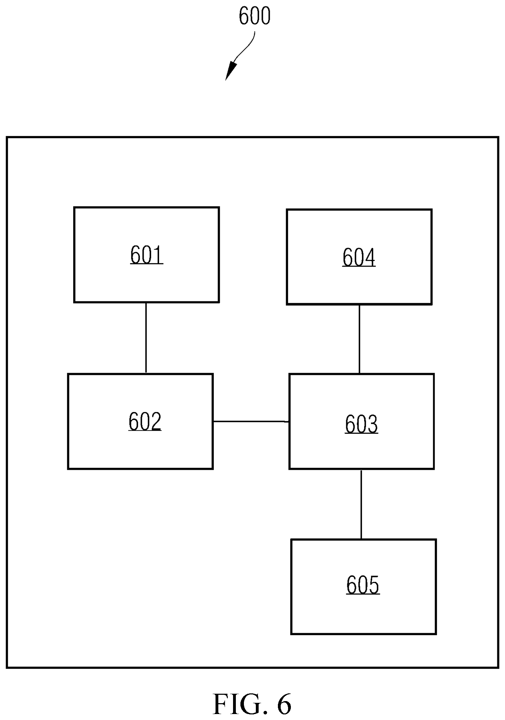

FIG. 6 is an example diagram of a structure of an application suite recommendation apparatus according to an implementation of the present invention. As shown in FIG. 6, the application suite recommendation apparatus 600 includes:
a receiving module 601, configured to receive requirement information of a digital system;
an input module 602, configured to input the requirement information to a recommendation unit adapted to recommend an application suite, where the recommendation unit is determined based on historical requirement information and label information of each application in a historical application suite, and the historical application suite is associated with the historical requirement information; and
a providing module 603, configured to provide the application suite recommended by the recommendation unit.

In an implementation, the apparatus includes: a mapping module 604, configured to: establish a mapping table based on a mapping relationship between a keyword in the historical requirement information and the label information of each application in the historical application suite; and store the mapping table in the recommendation unit, where the recommendation unit is adapted to determine, by querying the mapping table, the label information that matches a keyword in the requirement information, and determine the recommended application suite based on the matching label information.

In an implementation, the apparatus includes: a training module 605, configured to: determine a training sample, where the training sample includes the historical requirement information, and a training label of the training sample is the label information of each application in the historical application suite; input the training sample to a neural network model, to receive label information of a predicted application from the neural network model; determine a loss function value based on a difference between the label information of the predicted application and the training label; and configure a model parameter of the neural network model, to cause the loss function value to be less than a preset threshold.

In an implementation, the providing module 603 is configured to, before providing the application suite recommended by the recommendation unit, parse an application dependency relationship of the recommended application suite; obtain, based on the application dependency relationship, an application on which the recommended application suite depends; and include the depended-on application in the recommended application suite.

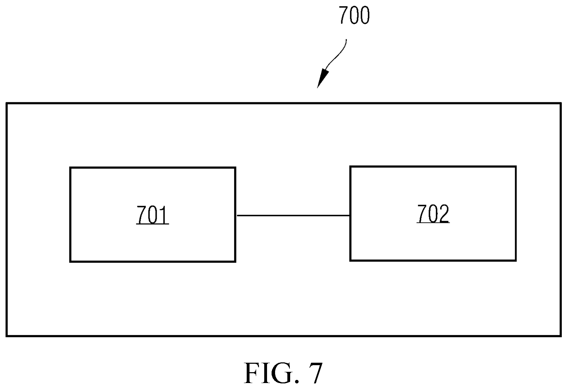

An implementation of the present invention further provides an electronic device having a processor-memory architecture. FIG. 7 is a diagram of a structure of an electronic device according to an implementation of the present invention. As shown in FIG. 7, the electronic device 700 includes a processor 701, a memory 702, and a computer program that is stored in the memory 702 and that can be run on the processor 701. When the computer program is executed by the processor 701, the application suite recommendation method according to any one of the foregoing is implemented. The memory 702 may be specifically implemented as various storage media such as an electrically erasable programmable read-only memory (EEPROM), a flash memory (Flash memory), and a programmable read-only memory (PROM). The processor 701 may be implemented to include one or more central processing units or one or more field programmable gate arrays, where the field programmable gate array integrates one or more central processing unit cores. Specifically, the central processing unit or the central processing unit core can be implemented as a CPU, an MCU, a DSP, or the like.

It should be noted that not all steps and modules in the foregoing procedures and diagrams of structures are necessary, and some steps or modules may be omitted according to an actual requirement. An execution sequence of the steps is not fixed and may be adjusted according to a requirement. Division of the modules is merely functional division for ease of description. During actual implementation, one module may be separately implemented by a plurality of modules, and functions of a plurality of modules may also be implemented by a same module. These modules may be located in a same device, or may be located in different devices.

Hardware modules in implementations may be implemented in a mechanical manner or an electronic manner. For example, one hardware module may include a specially designed permanent circuit or logical device (for example, a dedicated processor, for example, an FPGA or an ASIC) for completing a specific operation. The hardware module may alternatively include a programmable logic device or circuit (for example, include a general-purpose processor or another programmable processor) temporarily configured by software for performing a specific operation. Whether the hardware module is specifically implemented in the mechanical manner, by using the dedicated permanent circuit, or by using the temporarily configured circuit (for example, configured by the software) may be determined based on cost and time considerations.

The foregoing descriptions are merely exemplary implementations of the present invention, and are not intended to limit the protection scope of the present invention. Any modification, equivalent replacement, or improvement made within the spirit and principle of the present invention shall fall within the protection scope of the present invention.

Nouns and pronouns referring to people in this patent application are not limited to a specific gender.

## Claims

1. An application suite recommendation method, comprising:
receiving (101) requirement information of a digital system;
inputting (102) the requirement information to a recommendation unit adapted to recommend an application suite, wherein the recommendation unit is determined based on historical requirement information and label information of each application in a historical application suite, and the historical application suite is associated with the historical requirement information; and
providing (103) the application suite recommended by the recommendation unit.

2. The method according to claim 1, comprising:
establishing a mapping table based on a mapping relationship between a keyword in the historical requirement information and the label information of each application in the historical application suite; and
storing the mapping table in the recommendation unit, wherein the recommendation unit is adapted to determine, by querying the mapping table, the label information that matches a keyword in the requirement information, and determine the recommended application suite based on the matching label information.

3. The method according to claim 1, comprising:
determining a training sample, wherein the training sample comprises the historical requirement information, and a training label of the training sample is the label information of each application in the historical application suite;
inputting the training sample to a neural network model, to receive label information of a predicted application from the neural network model;
determining a loss function value based on a difference between the label information of the predicted application and the training label; and
configuring a model parameter of the neural network model, to cause the loss function value to be less than a preset threshold.

4. The method according to claim 1, wherein the requirement information comprises at least one of the following:
a system functional requirement that meets a standard vocabulary about functional division of the digital system;
a digital state of the digital system;
hardware configuration information of the digital system; and
an engineering scope of the digital system.

5. The method according to claim 1, wherein the label information comprises at least one of the following:
a unique identifier of the application; and
capability description information of the application.

6. The method according to any one of claims 1 to 5, wherein before the providing (103) the application suite recommended by the recommendation unit, the method further comprises:
parsing an application dependency relationship of the recommended application suite;
obtaining, based on the application dependency relationship, an application on which the recommended application suite depends; and
comprising the depended-on application in the recommended application suite.

7. An application suite recommendation apparatus, comprising:
a receiving module (601), configured to receive requirement information of a digital system;
an input module (602), configured to input the requirement information to a recommendation unit adapted to recommend an application suite, wherein the recommendation unit is determined based on historical requirement information and label information of each application in a historical application suite, and the historical application suite is associated with the historical requirement information; and
a providing module (603), configured to provide the application suite recommended by the recommendation unit.

8. The apparatus according to claim 7, comprising:
a mapping module (604), configured to: establish a mapping table based on a mapping relationship between a keyword in the historical requirement information and the label information of each application in the historical application suite; and store the mapping table in the recommendation unit, wherein the recommendation unit is adapted to determine, by querying the mapping table, the label information that matches a keyword in the requirement information, and determine the recommended application suite based on the matching label information.

9. The apparatus according to claim 7, comprising:
a training module (605), configured to: determine a training sample, wherein the training sample comprises the historical requirement information, and a training label of the training sample is the label information of each application in the historical application suite; input the training sample to a neural network model, to receive label information of a predicted application from the neural network model; determine a loss function value based on a difference between the label information of the predicted application and the training label; and configure a model parameter of the neural network model, to cause the loss function value to be less than a preset threshold.

10. The apparatus according to any one of claims 7 to 9, wherein
the providing module (603) is configured to, before providing the application suite recommended by the recommendation unit, parse an application dependency relationship of the recommended application suite; obtain, based on the application dependency relationship, an application on which the recommended application suite depends; and comprise the depended-on application in the recommended application suite.

11. An electronic device, comprising:
a processor (701); and
a memory (702), configured to store executable instructions of the processor (701), wherein
the processor (701) is configured to: read the executable instructions from the memory (702), and execute the executable instructions to implement the application suite recommendation method according to any one of claims 1 to 6.

12. A computer-readable storage medium, storing computer instructions, wherein when the computer instructions are executed by a processor, the application suite recommendation method according to any one of claims 1 to 6 is implemented.

13. A computer program product, comprising a computer program, wherein when the computer program is executed by a processor, the application suite recommendation method according to any one of claims 1 to 6 is implemented.
